Europäisches Patentamt

European Patent Office

Office européen des brevets

(19)

(11) Numéro de publication : **0 325 069 B1**

(12) **FASCICULE DE BREVET EUROPEEN**

(45) Date de publication du fascicule du brevet :
29.05.91 Bulletin 91/22

(51) Int. Cl.⁵ : **F16B 37/08**

(21) Numéro de dépôt : **88403274.9**

(22) Date de dépôt : **21.12.88**

(54) **Ecrou de fixation.**

(30) Priorité : **22.01.88 FR 8800728**

(43) Date de publication de la demande :
**26.07.89 Bulletin 89/30**

(45) Mention de la délivrance du brevet :
**29.05.91 Bulletin 91/22**

(84) Etats contractants désignés :
**DE GB IT**

(56) Documents cités :
**US-A- 2 530 225**
**US-A- 3 080 633**
**US-A- 3 352 341**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Pajot Jean-Claude**
**6, rue Marcel Martin**
**95430 Auvers sur Oise (FR)**

(74) Mandataire : **Kohn, Philippe et al**
**c/o CABINET LAVOIX 2, place d'Estienne**
**d'Orves**
**F-75441 Paris Cédex 09 (FR)**

Jouve, 18, rue Saint-Denis, 75001 PARIS

EP 0 325 069 B1

## Description

La présente invention a pour objet un écrou de fixation prévu pour coopérer avec un corps fileté en vue de permettre le serrage axial de deux pièces.

Elle concerne plus particulièrement un écrou dont le montage s'effectue sur le corps fileté sans rotation mais qui soit néanmoins amovible afin de permettre le démontage des deux pièces.

On connaît de l'état de la technique différents types d'écrous, notamment en matière plastique, dont le montage peut être effectué axialement c'est-à-dire en n'exerçant sur l'écrou qu'une simple action de poussée parallèle à l'axe commun à l'écrou et au corps fileté.

Un écrou de ce type est décrit et représenté dans le document EP-A-0 153 489, comportant une paroi interne lisse sensiblement cylindrique qui se déforme élastiquement lors du montage. Du fait de la déformation élastique de la paroi et de l'action radiale concentrique qu'elle exerce sur le corps fileté, une empreinte du filet extérieur du corps fileté se marque légèrement dans la paroi de l'alésage interne de l'écrou. On constate à l'usage que cette empreinte est insuffisante pour assurer un arrêt axial sûr de l'écrou par rapport au corps fileté, et donc un serrage suffisant et sûr des pièces que l'on désire assembler entre elles.

Un autre écrou à montage axial est connu du document EP-A-0 165 026 dont l'alésage cylindrique interne comporte une pluralité de languettes élastiques en forme de portions de cercle qui coopèrent par déformation élastique avec les filets du corps fileté. De telles languettes sont vulnérables et ne permettent pas non plus d'assurer un maintien axial de l'écrou en toute sécurité sur le corps fileté.

Le document US-A-2.530.225 décrit et représente un écrou de fixation prévu pour coopérer avec un corps fileté en vue de permettre le serrage axial de deux pièces, du type comportant une bague en matière plastique comportant au moins une fente axiale et possédant un alésage dont le diamètre intérieur initial est supérieur au diamètre extérieur du filet du corps fileté pour permettre sa mise en place par coulissement axial et qui est déformable radialement au moyen d'une douille de serrage qui coopère avec la surface périphérique externe de la bague pour provoquer une réduction dudit diamètre intérieur. Les moyens pour comprimer la douille sont toutefois d'une structure complexe et coûteuse à mettre en oeuvre industriellement.

Afin de remédier aux inconvénients des dispositifs connus qui viennent d'être mentionnés, l'invention propose un écrou du type de celui décrit dans le document US-A-2.530.225, caractérisé en ce que la surface périphérique externe de la bague comporte des zones inclinées par rapport à l'axe qui constituent des rampes de serrage avec lesquelles coopère la surface interne de la douille de serrage qui est poussée axialement sur la bague en vue de l'opération de serrage axial au cours de laquelle la bague est déformée plastiquement pour empreindre un filetage interne à la surface dudit alésage (36), la bague et la douille comportant des moyens de retenue assurant leur liaison réciproque préalablement à l'opération de serrage axial.

En assurant une compression radiale suffisante de la bague au moyen de la douille de serrage, on est certain que l'empreinte réalisée dans l'alésage de la bague par déformation plastique de cette dernière est complémentaire du filet extérieur du corps fileté et qu'on a ainsi créé un taraudage interne complet équivalent à celui d'un écrou classique monté par vissage. La création d'un tel filet interne dans l'écrou assure à la fois un maintien axial sûr de l'écrou sur le corps fileté tout en permettant son démontage par rotation c'est-à-dire selon une opération classique de dévissage.

Grâce à cette caractéristique on comprend que l'opération de fixation des deux pièces à l'aide d'un tel écrou se résume à un simple déplacement axial de l'ensemble bague-douille en direction du corps fileté, celui-ci devant, s'il n'est pas fixé à l'une des deux pièces à assembler, être momentanément immobilisé axialement.

Cette caractéristique est particulièrement avantageuse en ce qu'elle permet un montage automatisé très aisé à l'aide de ce type d'écrou, notamment au moyen d'un robot de montage dont l'action se résume à un déplacement axial de sa tête par rapport au corps fileté.

Selon un mode de réalisation préféré de l'invention, la bague comporte plusieurs fentes axiales, régulièrement réparties angulairement, s'étendant depuis l'une de ses extrémités pour la diviser en plusieurs mors reliés entre eux par la partie d'extrémité non fendue de la bague. Chaque mors peut comporter une rampe de serrage formée à sa surface périphérique externe. Grâce à cette conception, la bague en matière plastique est équivalente à un mandrin de serrage à mors concentriques qui sont comprimés radialement simultanément par la douille de serrage sous l'action de la poussée axiale qui lui est appliquée.

Les moyens de retenue peuvent être constitués par un épaulement radial externe de profil conique de la bague qui est reçue dans une gorge radiale interne correspondante de la douille dont il peut s'échapper par déformation élastique lorsque la douille est poussée axialement. Cet agencement est particulièrement avantageux dans le cas où l'écrou selon l'invention est utilisé en montage automatique à l'aide d'un robot de montage, la tête de ce dernier faisant fonction de tête de préhension simultanée, de la douille et de la bague qui forment un tout unitaire.

Enfin selon d'autres caractéristiques de l'invention l'alésage interne de la bague comporte initialement des rainures axiales, la douille est réalisée en métal, et la douille et la surface périphérique de la bague présentent une section hexagonale.

D'autres caractéristiques et avantages de l'invention apparaîtront à la lecture de la description détaillée qui va suivre pour la compréhension de laquelle on se reportera au dessin annexé dans lequel :

— La figure 1 est une vue en perspective à échelle agrandie de la bague de l'écrou selon l'invention;

— la figure 2 est une vue en coupe axiale d'un écrou selon l'invention représenté après mise en place sur un corps fileté, mais dans sa position initiale non serrée ;

— la figure 3 est une vue similaire à celle de la figure 2 dans laquelle l'écrou de fixation est représenté dans la configuration finale qu'il occupe à l'issue de l'opération de serrage ; et

— la figure 4 est une vue en coupe partielle selon la ligne 4-4 de la figure 2, la demi-vue inférieure correspondant à la position serrée de l'écrou représenté à la figure 3.

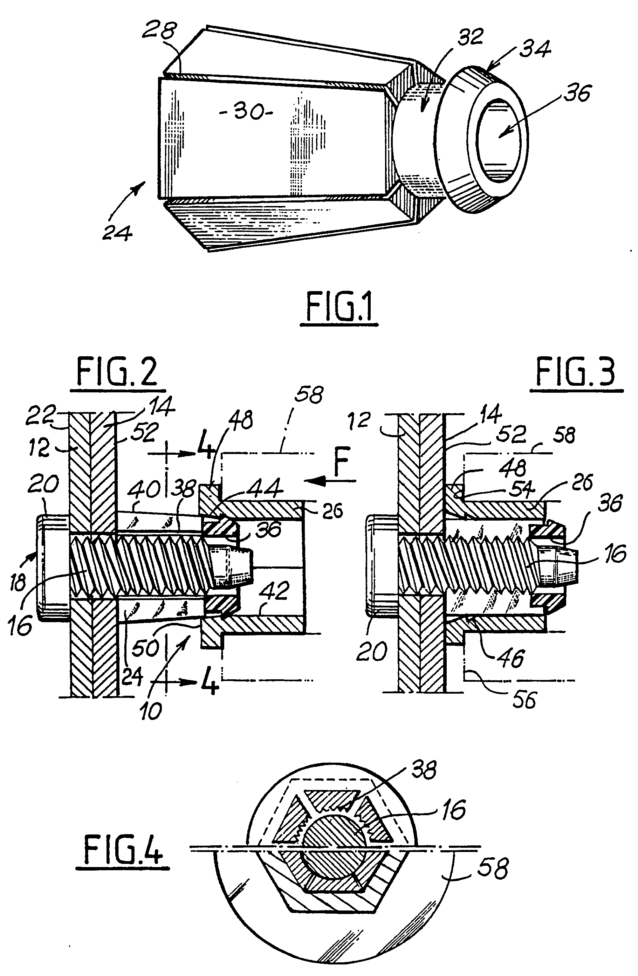

L'écrou 10 selon l'invention représenté aux figures 2 à 4 permet de réaliser le serrage axial de deux pièces 12 et 14 en coopération avec le corps fileté 16 d'une vis 18 dont la tête 20 prend appui sur la face en vis-à-vis 22 de la pièce 12.

L'écrou selon l'invention est pour l'essentiel constitué par une bague en matière plastique 24 et par une douille de serrage 26.

Comme on peut le constater à la figure 1, le corps de la bague 24 est fendu axialement depuis son extrémité gauche par six fentes 28 réparties angulairement qui le divisent en six pièces en forme de pétales 30 qui constituent des mors de serrage. Les mors 30 sont reliés entre eux par une partie non fendue 32 du corps de la bague 24 qui se termine à son extrémité libre, à droite en considérant la figure 1, par un épaulement radial de forme conique 34 dont la fonction sera décrite plus avant.

Le corps de la bague 24 possède un alésage interne 36 dont le diamètre intérieur est sensiblement égal, mais toutefois légèrement supérieur au diamètre extérieur du filet du corps fileté 16 afin de permettre l'introduction de ce dernier par coulissement dans le corps de la bague 24. L'alésage interne 36 comporte, sur sa longueur correspondant à celle des mors 30, des rainures axiales 38.

La surface périphérique externe de chacun des mors 30 est constituée par une portion inclinée par rapport à l'axe de la bague de façon à constituer une rampe de serrage axial. Comme on peut le voir sur les figures, l'inclinaison des rampes 40 est orientée de façon que l'encombrement radial hors tout de la bague aille en s'accroissant en direction de la tête de la vis 18 c'est-à-dire depuis la droite vers la gauche en considérant les figures 1 à 3.

La douille de serrage 26 est une douille métallique horizontale. Sa surface interne 42 à six pans se termine à son extrémité libre de gauche par un chanfrein d'entrée 44 facilitant l'introduction par poussée axiale de la douille 26 sur le corps de la bague 24. Une rainure radiale interne 46 de profil complémentaire à celui de l'épaulement 34 est prévue dans la zone délimitant le chanfrein d'entrée 44 de de façon à assurer un prépositionnement et une retenue temporaire de la bague 26 sur la douille 24 comme cela est représenté à la figure 2.

Enfin la douille 26 comporte un épaulement radial 48 dont la face latérale de gauche 50 est prévue pour venir en appui sur la face en vis-à-vis 52 de la pièce 14 et dont la face latérale de droite 54 est prévue pour coopérer avec la face en vis-à-vis 56 d'une tête de préhension et de poussée 58 représentée en silhouette aux figures 2 et 3.

Le mode d'utilisation de l'écrou de fixation qui vient d'être décrit est le suivant.

A l'aide d'un outil de préhension tel que la tête de préhension 58 représentée aux figures, on introduit l'ensemble formé par la bague 24 et par la douille 26 sur le corps fileté 16 de la vis 18 qui est, au moins temporairement, immobilisé axialement par rapport aux pièces 12 et 14 dans la position illustrée aux figures 2 et 3. L'introduction de la bague 24, jusqu'à ce qu'elle vienne occuper la position représentée à la figure 2, se fait par simple coulissement axial du corps fileté 16 à l'intérieur de l'alésage interne 36.

L'opération de serrage proprement dite s'effectue ensuite en exerçant, à l'aide de la tête 58, un effort de poussée axiale F sur la bague de serrage 26.

Dans un premier temps, sous l'action de l'effort de poussée F, l'épaulement conique 34 se dégage, par déformation élastique radiale, de la rainure correspondante 46. Le déplacement axial, vers la gauche en considérant les figures, de la douille de serrage 26 par rapport à la bague 24 qui est en butée axiale contre la pièce 14, se poursuit. Le chanfrein d'entrée 44 commence à coopérer avec les rampes 40 pour provoquer leur serrage progressif. Cette opération de serrage se poursuit et s'accroît par compression radiale des mors sous l'action de la coopération des rampes 40 avec la surface interne 42 dont la dimension est choisie de manière à provoquer un serrage maximal par compression radiale des mors 30 ainsi que la réalisation d'une empreinte complète du filetage externe du corps fileté 16 à la surface de l'alésage interne 26 de la bague en matière plastique.

Les rainures axiales internes 38 formées initialement dans l'alésage interne 36 de la bague ont pour but de faciliter la pénétration des filets du corps 16 dans l'alésage de la bague 24 et la réalisation de l'empreinte dans celle-ci.

A l'issue de l'opération de serrage, c'est-à-dire dans la position représentée à la figure 3 et à la partie inférieure de la figure 4, l'ensemble formé par la bague 24 et par la douille de serrage 26 constitue un écrou à coeur en matière plastique qui comporte un taraudage interne complet en permettant le démontage par dévissage. A cet effet, la forme hexagonale de la douille 26 lui permet de coopérer avec la tête d'une visseuse. Le fait que la partie interne de l'écrou ainsi constitué soit en matière plastique en fait un écrou du type freiné.

Pour assurer la solidarisation en rotation de la bague et de la douille, la section de leurs surfaces coopérantes peut être polygonale comme dans le mode de réalisation décrit ou partiellement circulaire. En variante, la surface externe de la bague est tronconique, de section entièrement circulaire, et la douille est également tronconique mais présente des reliefs internes qui pénètrent dans la bague en déformant sa surface externe lors du serrage radial provoqué par la poussée axiale de la douille.

## Revendications

1. Ecrou de fixation (10) prévu pour coopérer avec un corps fileté (16) en vue de permettre le serrage axial de deux pièces (12, 14), du type comportant une bague en matière plastique (24) comportant au moins une fente axiale (28) et possédant un alésage (36) dont le diamètre intérieur initial est supérieur au diamètre extérieur du filet du corps fileté pour permettre sa mise en place par coulissement axial et qui est déformable radialement au moyen d'une douille de serrage (26) qui coopère avec la surface périphérique externe (40) de la bague pour provoquer une réduction dudit diamètre intérieur, caractérisé en ce que la surface périphérique externe de la bague comporte des zones (40) inclinées par rapport à l'axe qui constituent des rampes de serrage avec lesquelles coopère la surface interne (42) de la douille de serrage (26) qui est poussée axialement sur la bague (24) en vue de l'opération de serrage axial au cours de laquelle la bague est déformée plastiquement pour empreindre un filetage interne à la surface dudit alésage (36), la bague (24) et la douille (26) comportant des moyens de retenue (34, 46) assurant leur liaison réciproque préalablement à l'opération de serrage axial.

2. Ecrou selon la revendication 1, caractérisé en ce que la bague (24) comporte plusieurs fentes axiales (28), régulièrement réparties angulairement, s'étendant depuis l'une de ses extrémités pour la diviser en plusieurs mors (30) reliés entre eux par la partie d'extrémité non fendue (32) de la bague.

3. Ecrou selon la revendication 2, caractérisé en ce que chaque mors (30) comporte une rampe de serrage (40) formée à sa surface périphérique externe.

4. Ecrou selon l'une quelconque des revendications précédentes caractérisé en ce que la douille et la surface périphérique de la bague présentent une section hexagonale.

5. Ecrou selon la revendication 1, caractérisé en ce que lesdits moyens de retenue sont constitués par un épaulement radial externe de profil conique (34) de la bague (24) qui est reçu dans une gorge radiale interne correspondante (46) de la douille dont il peut s'échapper par déformation élastique lorsque la douille est poussée axialement.

6. Ecrou selon l'une quelconque des revendications précédentes caractérisé en ce que ledit alésage interne (36) comporte initialement des rainures axiales (38).

7. Ecrou selon l'une quelconque des revendications précédentes caractérisé en ce que la douille est en métal.

## Ansprüche

1. Befestigungsmutter (10) für ein Zusammenwirken mit einem Gewindekörper (16) zur axialen Klemmung von zwei Teilen (12, 14), mit einem Kunststoffring (24), welcher wenigstens einen Axialschlitz (28) aufweist und eine Bohrung (36) besitzt, deren anfänglicher Innendurchmesser größer als der Gewindeaußendurchmesser des Gewindekörpers ist, so daß der Ring durch axiales Gleiten in Stellung gebracht werden kann, wobei der Ring mittels einer Spannhülse (26) radial verformbar ist, welche mit der äußeren Umfangsfläche (40) des Rings eine Verminderung von dessen Innendurchmesser bewirkend zusammenwirkt, dadurch gekennzeichnet, daß die äußere Umfangsfläche des Rings bezüglich der Achse geneigte Bereiche (40) aufweist, welche Klemmrampen bilden, mit welchen die Innenfläche (42) der Spannhülse (26) zusammenwirkt, die angesichts des Vorgangs der axialen Klemmung, in dessen Verlauf der Ring plastisch verformt und ein Innengewinde in die Fläche der Bohrung (36) eingedrückt wird, axial auf den Ring (24) geschoben wird, wobei der Ring (24) und die Hülse (26) Haltemittel (34, 46) aufweisen, die ihre gegenseitige Verbindung vor dem Vorgang der axialen Klemmung gewährleisten.

2. Mutter nach Anspruch 1, dadurch gekennzeichnet, daß der Ring (24) winkelmäßig gleichmäßig verteilt mehrere Axialschlitze (28) aufweist, die sich von dem einen seiner Enden wegerstrecken und ihn in mehrere Spannbacken (30) unterteilen, die miteinander durch den nicht geschlitzten Endabschnitt (32) des Rings verbunden sind.

3. Mutter nach Anspruch 2, dadurch gekennzeichnet, daß jede Spannbacke (30) eine auf ihrer äußeren Umlaufsfläche ausgebildete Klemmrampe (40) aufweist.

4. Mutter nach irgendeinem der vorstehenden Ansprüche, dadurch gekennzeichnet, daß die Hülse und die Umfangsfläche des Rings einen hexagonalen Querschnitt aufweisen.

5. Mutter nach Anspruch 1, dadurch gekennzeichnet, daß die Haltemittel durch eine konisch profilierte äußere radiale Schulter (34) des Rings (24) gebildet sind, welche in einer entsprechenden radialen Innenkehle (46) der Hülse aufgenommen ist, aus der sie durch elastische Verformung entweichen kann, wenn die Hülse axial gedrückt wird.

6. Mutter nach irgendeinem der vorstehenden Ansprüche, dadurch gekennzeichnet, daß die Innenbohrung (36) anfänglich axiale Rillen (38) aufweist.

7. Mutter nach irgendeinem der vorstehenden Ansprüche, dadurch gekennzeichnet, daß die Hülse aus Metall ist.

## Claims

1. Fastening nut (10) intended for interacting with a threaded body (16) for the purpose of making it possible to clamp two components (12, 14) axially, of the type comprising a plastic ring (24) which has at least one axial slot (28) and possesses a bore (36), of which the initial inside diameter is larger than the outside diameter of the thread of the threaded body to allow it be put in place by axial sliding, and which is radially deformable by means of a clamping bush (26) interacting with the outer peripheral surface (40) of the ring in order to bring about a reduction of the said inside diameter, characterised in that the outer peripheral surface of the ring has zones (40) inclined relative to the axis and forming clamping ramps, with which interacts the inner surface (42) of the clamping bush (26) pushed axially onto the ring (24) for the purpose of the axial clamping operation, during which the ring experiences plastic deformation so as to imprint an internal thread in the surface of the said bore (36), the ring (24) and the bush (26) having retention means (34, 46) ensuring that they are mutually connected before the axial clamping operation.

2. Nut according to Claim 1, characterised in that the ring (24) has a plurality of axial slots (28) uniformly distributed angularly and extending from one of its ends so as to divide it into a plurality of jaws (30) connected to one another by means of the non-slotted (32) end part of the ring.

3. Nut according to Claim 2, characterised in that each jaw (30) has a clamping ramp (40) formed on its outer peripheral surface.

4. Nut according to any one of the preceding claims, characterised in that the bush and the peripheral surface of the ring have a hexagonal cross-section.

5. Nut according to Claim 1, characterised in that the said retention means consist of an outer radial shoulder of conical profile (34) of the ring (24), which is received in a corresponding inner radial groove (46) of the bush, from which it can escape as a result of elastic deformation when the bush is pushed axially.

6. Nut according to any one of the preceding claims, characterised in that the said inner bore (36) initially possesses axial flutes (38).

7. Nut according to any one of the preceding claims, characterised in that the bush is made of metal.

FIG.1

FIG.2

FIG.3

FIG.4